# EUROPÄISCHE PATENTSCHRIFT

(11) **EP 2 508 238 B1**
(45) Veröffentlichungstag und Bekanntmachung des Hinweises auf die Patenterteilung: **15.06.2016**
(21) Anmeldenummer: 12161663.5
(22) Anmeldetag: 28.03.2012
(51) Int. Cl.: B01D 29/52, B01D 29/64, B01D 29/68

(54) **Bernoulli-Filter**
Bernoulli filter
Filtre de Bernoulli

(30) Priorität: 07.04.2011 DE 102011007003
(43) Veröffentlichungstag der Anmeldung: 10.10.2012
(73) Patentinhaber: Georg Schünemann GmbH, 28201 Bremen (DE)
(72) Erfinder: Linster, Wolfgang, 28197 Bremen (DE); Maier, Michael, 27211 Bassum-Hallstedt (DE)
(74) Vertreter: Eisenführ Speiser

(56) Entgegenhaltungen:
- WO-A1-2007/062763
- DE-A1-102005 055 555
- DE-A1-102009 012 444
- DE-U1- 29 822 113

## Beschreibung

Die Erfindung betrifft eine Filter-Vorrichtung zum Filtern von Flüssigkeiten sowie ein Verfahren zum Filtern von Flüssigkeiten.

Filter-Vorrichtungen der eingangs genannten Art sind beispielsweise aus DE 10 2005 055 555 oder SE 464 062 bekannt. Eine solche Filter-Vorrichtung weist in der Regel ein Gehäuse mit einem Einlass und einem Auslass und ein in dem Gehäuse angeordnetes Filterelement auf. Dabei ist das Filterelement in der Regel im Wesentlichen zylindrisch ausgebildet. Zudem weisen solche gattungsgemäßen Filter-Vorrichtungen ein Filter-Reinigungselement auf, welches entlang der Zentralachse des zylindrischen Filterelements in das Filterelement einführbar ist. Durch dieses axiale Einführen des Filter-Reinigungselements wird in einem Bereich einer inneren Oberfläche des Filterelements eine Strömungsgeschwindigkeit aufgrund der Querschnittsverengung erhöht, wodurch im Filterelement anhaftende Stoffe abgespült werden. Die Reinigung eines solchen Filterelements erfolgt also in der Regel berührungslos durch eine Strömungsgeschwindigkeitserhöhung. Daher werden solche Filter-Vorrichtungen auch als Bernoulli-Filter bezeichnet.

Solche Filter-Vorrichtungen bzw. Bernoulli-Filter werden in einer Vielzahl von industriellen Anwendungen beispielsweise in der petrochemischen oder pharmazeutischen Industrie, der Energiewirtschaft oder auch auf Schiffen eingesetzt.

Auch wenn die berührungslose Selbstreinigung solcher gattungsgemäßen Filter-Vorrichtungen einen großen Vorteil in der Nutzung solcher Filter darstellt, ist insbesondere die Baugröße solcher Filter-Vorrichtungen nachteilig. Die Baugröße ist dabei insbesondere abhängig von der Größe des zu filternden Volumenstroms der Flüssigkeit, sodass der Durchsatz an zu filternder Flüssigkeit aufgrund von Baugrößenrestriktionen beschränkt ist. Ein weiterer Nachteil liegt in der Art der Reinigung der Filter-Vorrichtung. Während der Reinigung mittels des Einführens des Filterreinigungselements, muss die Filter-Vorrichtung mit einer erhöhten Pumpenleistung betrieben werden.

Aufgabe der vorliegenden Erfindung ist es, eine Filter-Vorrichtung sowie ein Verfahren zum Filtern von Flüssigkeiten anzugeben, welche wenigstens bezüglich eines der genannten Probleme verbessert sind. Insbesondere ist es Aufgabe der vorliegenden Erfindung eine Filter-Vorrichtung und ein Verfahren anzugeben, welche eine verringerte Baugröße aufweist bzw. welches eine kompaktere Bauart einer Filter-Vorrichtung ermöglicht und/oder einen erhöhten Volumenstrom an zu filternder Flüssigkeit filtern kann und/oder bei welcher bzw. durch welches die Verfügbarkeit einer Filter-Vorrichtung erhöht ist.

Die Aufgabe wird durch eine Filter-Vorrichtung der eingangs genannten Art gelöst mit einem Gehäuse, welches wenigstens einen Einlass zum Einlassen der zu filternden Flüssigkeit und wenigstens einen Auslass zum Abgeben der zu filternden Flüssigkeit aufweist, wenigstens zwei in das Gehäuse einsetzbaren im Wesentlichen zylindrischen Filterelementen, welche eine Vielzahl von Öffnungen aufweisen, durch welche die Flüssigkeit hindurch strömen kann, und dabei Partikel aus der Flüssigkeit herausgefiltert werden, und wenigstens einem in ein Filterelement einführbaren Filter-Reinigungselement, welches in einem Bereich einer inneren Oberfläche des Filterelements eine Strömungsgeschwindigkeit der zu filternden Flüssigkeit erhöht und dabei im Filterelement befindliche und/oder anhaftende Stoffe abgespült werden, wobei die Filterelemente in der Filter-Vorrichtung parallel geschaltet angeordnet sind (Anspruch 1). Solche Filter-Vorrichtungen können auch als Multi-Bernoulli-Filter bezeichnet werden.

Indem wenigstens zwei Filterelemente in dem Gehäuse parallel geschaltet angeordnet sind, wird die Baugröße der Filter-Vorrichtung erfindungsgemäß wesentlich reduziert und die Bauart ist kompakter. Der durch eine Filter-Vorrichtung durchsetzbare Volumenstrom an zu filternder Flüssigkeit ist im Wesentlichen abhängig von einer Wirkfläche eines Filterelements. Indem mehrere, also wenigstens zwei, Filterelemente in einem Gehäuse angeordnet sind, wird der durchsetzbare Volumenstrom erhöht, ohne die Baugröße der Filter-Vorrichtung wesentlich zu erhöhen. Zudem wird die Betriebsbereitschaft einer erfindungsgemäßen Vorrichtung wesentlich erhöht, da es möglich ist, die zwei oder mehr Filterelemente nacheinander, bzw. unabhängig voneinander zu reinigen, wodurch jeweils mindestens ein Filterelement zur Filterung einsetzbar ist. Dadurch wird der Betrieb einer erfindungsgemäßen Filter-Vorrichtung nicht unterbrochen, sondern lediglich der Volumenstrom der gefilterten Flüssigkeit wird kurzzeitig verringert oder die Pumpenleistung wird kurzzeitig geringfügig erhöht. Zudem wird ein Rückspülvolumenstrom, der zum Reinigen eines Filterelements genutzt wird, wesentlich verringert. Dies ist möglich, da die Filterelemente parallel geschaltet angeordnet sind. Das heißt, dass die Filterelemente parallel geschaltet bezogen auf den durch die Filter-Vorrichtung strömenden Flüssigkeitsstrom geschaltet angeordnet sind. Beispielsweise tritt der Flüssigkeitsstrom durch den Einlass in die Filter-Vorrichtung ein, ein erster Teil des Flüssigkeitsstrom strömt dann durch ein erstes Filterelement, ein zweiter Teil des Flüssigkeitsstrom strömt gleichzeitig durch ein zweites Filterelement, die beiden gefilterten Teilströme des Flüssigkeitsstrom werden anschließend vereint und strömen gemeinsam aus dem Auslass der Filter-Vorrichtung heraus. Weist die Filter-Vorrichtung mehr als zwei Filterelemente, beispielsweise drei, vier, fünf, usw. auf, sind sämtliche Filterelemente parallel geschaltet. Das Gehäuse weist wenigstens einen Einlass auf. Vorzugsweise weist das Gehäuse ebenso viele Einlässe wie Filterelemente auf. Dann ist es bevorzugt, jedem Filterelement einen Einlass zuzuordnen oder umgekehrt. So ist das Parallelschalten der Filterelemente besonders einfach. Alternativ weist die Filter-Vorrichtung einen oder mehr Einlässe auf, wobei jeweils zwei oder mehr Filterelemente einem Einlass zugeordnet sind. Die Filterelemente sind im Wesentlichen zylindrisch ausgebildet, also vorzugsweise zylindrisch. Unter im Wesentlichen zylindrische Filterelemente fallen auch quadratische, rechteckige, mehreckige, ovale usw. geformte Filterelemente.

Gemäß einer ersten bevorzugten Ausführungsform ist das Gehäuse im Wesentlichen zylindrisch und die Filterelemente sind so in dem Gehäuse angeordnet, dass die Zentralachsen des Gehäuses und der Filterelemente im Wesentlichen parallel zueinander sind, wobei die Summe der durchströmbaren Wirkflächen der Filterelemente größer ist als die radial innere Oberfläche des Gehäuses. Die Wirkflächen eines Filterelements sind die Flächen eines Filterelements, die die Filterfunktion übernehmen. Das heißt die Flächen, die die Vielzahl von Öffnungen aufweisen. Sind die Filterelemente beispielsweise vollständig hohlzylindrisch ausgebildet, ist die Wirkfläche eines solchen Filterelements die Zylindermantelfläche. Indem die Summe der Wirkflächen der Filterelemente größer ist als die radiale innere Oberfläche des Gehäuses, wird die Baugröße der Filter-Vorrichtung wesentlich reduziert. Insbesondere durch das parallele Anordnen der Zentralachsen des Gehäuses sowie der Filterelemente wird eine kompakte Bauform der Filter-Vorrichtung erreicht.

Die zu filternde Flüssigkeit strömt im Wesentlichen radial von innen nach außen durch das Filterelement, wobei jeweils ein Einlass eines Filterelements an einem axialen Ende eines Filterelements angeordnet ist. Die Zylindermantelfläche des zylinderförmigen Filterelements bildet demnach die Wirkfläche des Filterelements. Der Einlass ist dann so axial angeordnet, dass die zu filternde Flüssigkeit zunächst im Wesentlichen axial in das Innere des Filterelements strömt. Anschließend durchströmt die zu filternde Flüssigkeit die Wirkfläche in radialer Richtung nach außen aus dem Filterelement heraus, wobei dadurch die zu filternde Flüssigkeit gefiltert wird. Sie gelangt in einen Zwischenraum zwischen Gehäuse und Filterelementen und strömt aus diesem Zwischenraum durch den Auslass in dem Gehäuse hinaus. Dadurch wird eine kompakte Bauform der Filter-Vorrichtung positiv beeinflusst und die Baugröße weiter reduziert. Der Auslass kann dabei sowohl axial, radial oder auch schrägwinklig bezogen auf das Gehäuse und/oder die Filterelemente angeordnet sein.

Gemäß einer weiteren Ausführungsform sind die Einlässe der Filterelemente mit einem Einlassverteiler verbunden, der dazu angepasst ist, einen Einlassstrom der zu filternden Flüssigkeit im Wesentlichen gleichmäßig auf die Einlässe der Filterelemente zu verteilen. Ein solcher Einlassverteiler kann beispielsweise durch mehrere Rohre gebildet sein, die einen Einlass jeweils mit einer Mehrzahl von Filterelementeinlässen verbinden. In der bevorzugten Ausführungsform weist der Einlassverteiler einen Verteilerraum auf, wobei in einer Wand dieses Verteilerraums der Einlass des Einlassverteilers angeordnet ist und in einer anderen Wand des Verteilerraums die Einlässe der Filterelemente angeordnet sind. Dies ist eine besonders einfache Möglichkeit einen Strom zu filternder Flüssigkeit im Wesentlichen gleichmäßig auf die Einlässe der Filterelemente zu verteilen. Dadurch wird einerseits die Baugröße der Filter-Vorrichtung reduziert, andererseits werden auch die Montage und der Betrieb einer solchen Filter-Vorrichtung wesentlich vereinfacht. Besonders bevorzugt ist der Auslass des Gehäuses koaxial zum Einlass des Einlassverteilers angeordnet. So sind Einlass und Auslass der Filter-Vorrichtung koaxial zueinander angeordnet, wodurch die Filter-Vorrichtung auf einfache Weise beispielsweise in eine bestehende Rohrleitung "In-Line" einbaubar ist.

Die Filter-Vorrichtung weist eine das Filter-Reinigungselement aufweisende Reinigungseinrichtung zum Reinigen des Filterelements auf, welche an einen dem Einlass gegenüberliegenden Ende eines Filterelements angeordnet ist. So wird die Baugröße weiter reduziert. Zudem ist diese Anordnung sehr vorteilhaft, da sich das Filter-Reinigungselement auf diese Weise besonders einfach axial in das Filterelement einführen lässt. Vorzugsweise ist jedem Filterelement eine separate Reinigungseinrichtung zugeordnet. Alternativ kann beispielsweise für zwei benachbart angeordnete Filterelemente eine gemeinsame Reinigungseinrichtung vorgesehen sein.

Die Reinigungseinrichtung weist eine Hubeinrichtung und eine Hubstange auf und das Filter-Reinigungselement ist an der Hubstange angeordnet, wobei die Hubeinrichtung dazu eingerichtet ist das Filter-Reinigungselement so in das Filterelement mittels der Hubstange axial einzuführen, dass zwischen einer inneren Wand des Filterelements und dem Filter-Reinigungselement ein Reinigungsspalt gebildet wird. Eine solche Hubeinrichtung kann beispielsweise hydraulisch, pneumatisch, elektrisch, elektromagnetisch oder auf andere Weise ausgebildet sein. Alternativ oder zusätzlich kann sie einen Seilzug oder ähnliches aufweisen, um die Hubstange axial in das Filterelement einzuführen.

Das Filter-Reinigungselement ist vorzugsweise als Scheibe ausgebildet, deren Außendurchmesser etwas kleiner ist als der Innendurchmesser eines im Wesentlichen zylindrischen Filterelements, sodass ein Reinigungsspalt zwischen Filter-Reinigungselement und Filterelement beim Einführen des Filter-Reinigungselements in das Filterelement gebildet wird. Strömt nun zu filternde Flüssigkeit durch das Filterelement, in axialer Richtung, muss diese Flüssigkeit zwischen innerer Oberfläche des Filterelements und Filterreinigungselement hindurch strömen, wodurch die Strömungsgeschwindigkeit lokal stark erhöht und der Druck lokal stark gesenkt wird. Dadurch werden an der inneren Oberfläche des Filterelements anhaftende aus der Flüssigkeit herausgefilterte Partikel gelöst und so das Filterelement gereinigt. Dieser Effekt wird auch als Bernoulli-Effekt bezeichnet. Diese Art der Reinigung ist besonders vorteilhaft, da das Filterelement so besonders schonend gereinigt wird, aufgrund der berührungslosen Reinigung.

Die Reinigungseinrichtung weist ein Bürstenelement auf, welches an der Hubstange angeordnet ist. Vorzugsweise ist das Bürstenelement benachbart zu dem Filter-Reinigungselement an der Hubstange angeordnet. Ferner bevorzugt ist das Bürstenelement an einer dem Einlass des Filterelements abgewandten Seite des Filter-Reinigungselements an der Hubstange angeordnet. Mittels eines solchen Bürstenelements wird die Strömung, welche in dem Filterelement zum Reinigen des Filterelements mittels des Filter-Reinigungselements ausgebildet wird, positiv beeinflusst, wodurch die Reinigung des Filterelements wesentlich effektiver geschieht. Die Bürste wirkt dabei berührend. Überraschenderweise hat sich gezeigt, dass mittels eines solchen Bürstenelements kleine Lebewesen, welche aus der zu filternden Flüssigkeit herausgefiltert wurden, besonders effektiv abgetötet werden können. Dies ist sehr vorteilhaft, wenn es sich bei diesen Lebewesen um Schädlinge, wie beispielsweise Larven oder ähnliches handelt. Die zu filternde Flüssigkeit bzw. die Flüssigkeit, welche die abgereinigten Partikel und/oder Lebewesen enthält, muss nicht mehr separat entsorgt oder chemisch behandelt werden, um die Lebewesen bzw. Schädlinge abzutöten, sondern diese werden direkt beim Reinigen des Filterelements mittels des Filter-Reinigungselements und/oder des Bürstenelements abgetötet.

Die Filter-Vorrichtung weist einen versperrbaren Rückspülauslass an einem dem Einlass gegenüberliegenden Ende eines Filterelements auf zum selektiven Auslassen von zur Reinigung des Filterelements benutzter Flüssigkeit. Wurde ein Filterelement mittels des Filter-Reinigungselements gereinigt, ist die in dem Filterelement vorhandene Flüssigkeit besonders stark mit Partikeln (abgereinigten Partikeln) beladen, sodass es vorteilhaft ist, diese stark verunreinigte Flüssigkeit durch einen Rückspülauslass aus der Filter-Vorrichtung zu entfernen. So werden die Filterelemente nicht sofort wieder verschmutzt und können effektiv weiter zum Filtern genutzt werden. Vorzugsweise weist jedes Filterelement einen solchen versperrbaren Rückspülauslass auf. Vorzugsweise sind sämtliche Rückspülauslässe sämtlicher Filterelemente miteinander verbunden, sodass sie einen gemeinsamen Auslass aufweisen. So ist es besonders einfach, die rückgespülte Flüssigkeit aus der Filter-Vorrichtung zu entfernen.

Es ist ferner bevorzugt, dass die Geometrie der Öffnungen des Filterelements so dimensioniert ist, dass Partikel, welche größer als 200 µm sind, vorzugsweise größer als 150 µm sind, insbesondere eine Größe in dem Bereich von 10 bis 20 µm aufweisen, aus der zu filternden Flüssigkeit herausfilterbar sind. Die Öffnungen des Filterelemente können dazu beispielsweise kreisförmig, spaltförmig oder dergleichen ausgebildet sind. Das Filterelement weist demnach vorzugsweise eine Filterfeinheit kleiner als 200 µm, vorzugsweise kleiner als 150µm, insbesondere eine Filterfeinheit in einem Bereich von 10 bis 20 µm, auf.

Gemäß einer weiteren bevorzugten Ausführungsform ist eines oder sind mehrere der Filterelemente selektiv absperrbar, insbesondere mittels eines Ventils. Vorzugsweise sind alle Filterelemente selektiv absperrbar. So sind einzelne oder alle Filterelemente passivierbar. Sie sind so absperrbar, dass das oder die abgesperrten Filterelemente nicht zum Filtern von Flüssigkeit genutzt werden. Vorzugsweise sind das eine oder die mehreren Filterelemente derart absperrbar, dass ein Strömen der zu filternde Flüssigkeit radial axial in das Filterelement hinein verhindert ist. Bevorzugt ist dazu wenigstens ein Ventil an der Filter-Vorrichtung vorgesehen. Vorzugsweise ist das Ventil dazu angepasst jeweils den Einlass eines entsprechenden Filterelements selektiv zu versperren und freizugeben. Vorzugsweise ist für jedes abzusperrende Filterelement ein entsprechendes Ventil vorgesehen. Vorzugsweise weist das Ventil einen Ventilkörper zum Verschließen eines Einlasses eines entsprechenden Filterelements auf. Indem eines oder mehrere der Filterelemente selektiv absperrbar ist bzw. sind, ist die Filter-Vorrichtung variabel an sich verändernde Flüssigkeits-Volumenströme anpassbar. Je nach Bedarf ist die Filter-Vorrichtung so mit einer entsprechenden Anzahl an Filterelementen betreibbar.

In einem weiteren Aspekt der Erfindung wird die Aufgabe bei einem Verfahren der eingangs genannten Art zum Filtern von Flüssigkeiten mit den Schritten gelöst (Anspruch 7): Einlassen von zu filternder Flüssigkeit durch wenigstens einen Einlass in mehrere Filterelemente, wobei die Filterelemente parallel geschaltet sind; Durchströmen von Wirkflächen der Filterelemente und dabei Filtern der Flüssigkeit; Sammeln der gefilterten Flüssigkeit in einem Sammelraum; Auslassen der gefilterten Flüssigkeit aus einem Auslass; wobei die Schritte wenigstens teilweise kontinuierlich ausgeführt werden. Gemäß diesem Verfahren wird ein Strom zu filternder Flüssigkeit auf mehrere, d. h. wenigstens zwei Filterelemente aufgeteilt, die bezogen auf den Strom der Flüssigkeit parallel geschaltet sind. Dadurch wird die Baugröße einer Vorrichtung mittels der das erfindungsgemäße Verfahren ausgeführt wird wesentlich verringert, insbesondere wird die Bauart wesentlich kompakter. Zudem wird die Verfügbarkeit bzw. Betriebsbereitschaft einer Vorrichtung mittels der das erfindungsgemäße Verfahren ausgeführt wird, wesentlich erhöht, da die Filterelemente parallel geschaltet sind, wodurch bei einer Reinigung der Filter-Vorrichtung stets jeweils mindestens ein Filterelement verfügbar ist. Die Vorrichtung mittels der das erfindungsgemäße Verfahren ausgeführt ist als Bernoulli-Filter ausgebildet. Vorzugsweise weist das Verfahren einen zusätzlichen Schritt des Reinigens auf, insbesondere Reinigen mittels eines Filter-Reinigungselements durch axiales Einführen des Filter-Reinigungselements in ein Filterelement. Insbesondere bevorzugt wird das Einführen des Filter-Reinigungselements in das Filterelement mittels einer Hubeinrichtung und einer Hubstange bewirkt.

Eine erste bevorzugte Ausführungsform des Verfahrens umfasst ein Aufteilen eines Flüssigkeitsstroms auf die Einlässe der mehreren Filterelemente. Ein solches Aufteilen kann beispielsweise gleichförmig geschehen, sodass in jedes Filterelement im Wesentlichen der gleiche Anteil eines Stromes an Flüssigkeit strömt. Ein solches Aufteilen kann beispielsweise mittels Rohren geschehen. Alternativ kann ein solches Aufteilen auch ungleichförmig sein, sodass der Anteil des in einen Filter einströmenden Teils des Flüssigkeitsstroms abhängig von einem Verschmutzungsgrad des Filters ist.

Gemäß einer weiteren bevorzugten Ausführungsform des Verfahrens enthält die zu filternde Flüssigkeit Lebewesen und das Verfahren umfasst zusätzlich die Schritte: Sammeln der Lebewesen an einer Wirkfläche eines Filterelements; Erzeugen einer Strömung wenigstens teilweise parallel zu der Wirkfläche, wobei die Strömung so ausgebildet ist, dass wenigstens ein Teil der gesammelten Lebewesen abgetötet wird. Bei solchen Lebewesen kann es sich insbesondere um Schädlinge und dergleichen handeln, die in der Flüssigkeit vorhanden sind. Solche Schädlinge können beispielsweise Larven sein. Indem die Lebewesen durch die erzeugte Strömung abgetötet werden, müssen die gesammelten Lebewesen nicht auf besondere Art und Weise entsorgt werden oder mittels chemischer Mittel abgetötet werden. Dies ist einerseits zeit- und kostensparend, andererseits ein umweltverträglicher Weg Schädlinge abzutöten.

Die erzeugte Strömung wird mittels eines Bürstenelements beeinflusst. Ein solches Bürstenelement eignet sich in besonderer Weise die Strömung so zu beeinflussen, dass diese geeignet ist, die Lebewesen abzutöten. Dadurch geschieht das Abtöten noch effektiver.

Gemäß einer weiteren bevorzugten Ausführungsform umfasst das Verfahren ferner den Schritt: selektives Absperren eines oder mehrerer Filterelemente, insbesondere mittels eines Ventils.

Es wird zum Filtern der Flüssigkeit ein Filterelement mit den Merkmalen eines oben beschriebenen Filterelements verwendet, in Verbindung mit einer Filter-Vorrichtung nach einem der vorstehenden Ausführungsbeispiele. Hinsichtlich der Vorteile wird auf die obigen Ausführungen eines Filterelements einer erfindungsgemäßen Filter-Vorrichtung sowie auf eine erfindungsgemäße Filter-Vorrichtung verwiesen.

Nachstehend wird die Erfindung anhand dreier Ausführungsbeispiele unter Bezugnahme auf die beiliegenden Figuren beschrieben. Es zeigen:
- Figur 1: eine perspektivische Ansicht einer Filter-Vorrichtung gemäß einem ersten Ausführungsbeispiel;
- Figur 2: eine Frontalansicht der Filter-Vorrichtung gemäß Figur 1;
- Figur 3: eine perspektivische Schnittdarstellung der Filter-Vorrichtung gemäß den Figuren 1 und 2;
- Figur 4: eine perspektivische Ansicht einer Filter-Vorrichtung gemäß einem zweiten Ausführungsbeispiel;
- Figur 5: eine Seitenansicht der Filter-Vorrichtung gemäß Figur 4;
- Figur 6: eine Draufsicht auf eine Filter-Vorrichtung gemäß den Figuren 4 und 5;
- Figur 7: eine perspektivische Schnittdarstellung der Filter-Vorrichtung gemäß den Figuren 4 bis 6; und
- Figur 8: eine perspektivische Schnittdarstellung einer Filter-Vorrichtung gemäß einem dritten Ausführungsbeispiel.

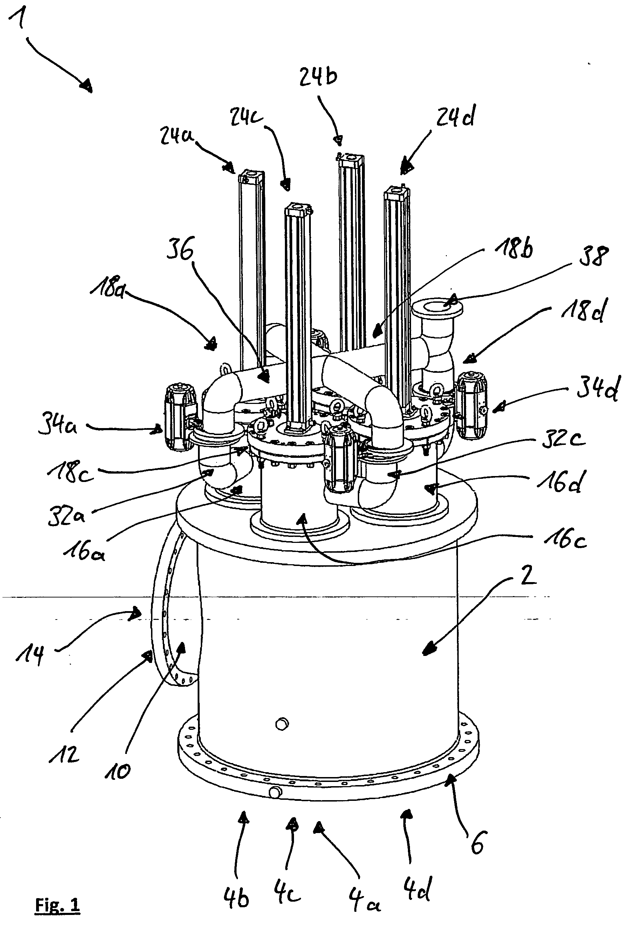

Die in Figur 1 bis 3 gezeigte Filter-Vorrichtung 1 dient zum Filtern einer Flüssigkeit, welche beispielsweise See-, Kühlwasser, Speisewasser, Prozesswasser oder ein Flüssigkeitsfeststoffgemisch für chemische, verfahrenstechnische oder petrochemische Vorgänge ist. Ferner kann diese Flüssigkeit Lebewesen enthalten.

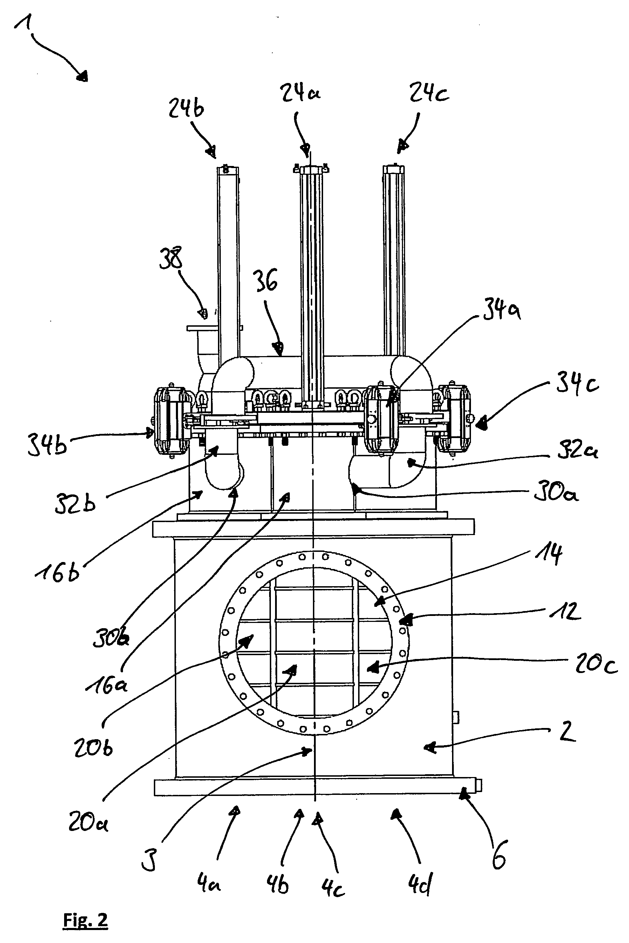

Ein im Wesentlichen zylindrisches Gehäuse 2 weist vier Einlässe 4a, 4b, 4c, 4d zum Einlassen der Flüssigkeit auf, welche in einer Bodenplatte 8 des Gehäuses 2 angeordnet sind. Die Bodenplatte 8 ist mit einem Flansch 6 umgeben, an den ein Rohr oder Einlassverteiler oder dergleichen anflanschbar ist. Ferner weist das Gehäuse 2 einen seitlichen Auslass 14 auf. An dem Auslass 14 ist ein Rohr 10 mit einem Flansch 12 angeordnet, durch den die Flüssigkeit radial bezogen auf eine Längsachse 3 (Figur 2) der Filter-Vorrichtung 1 ausströmen kann.

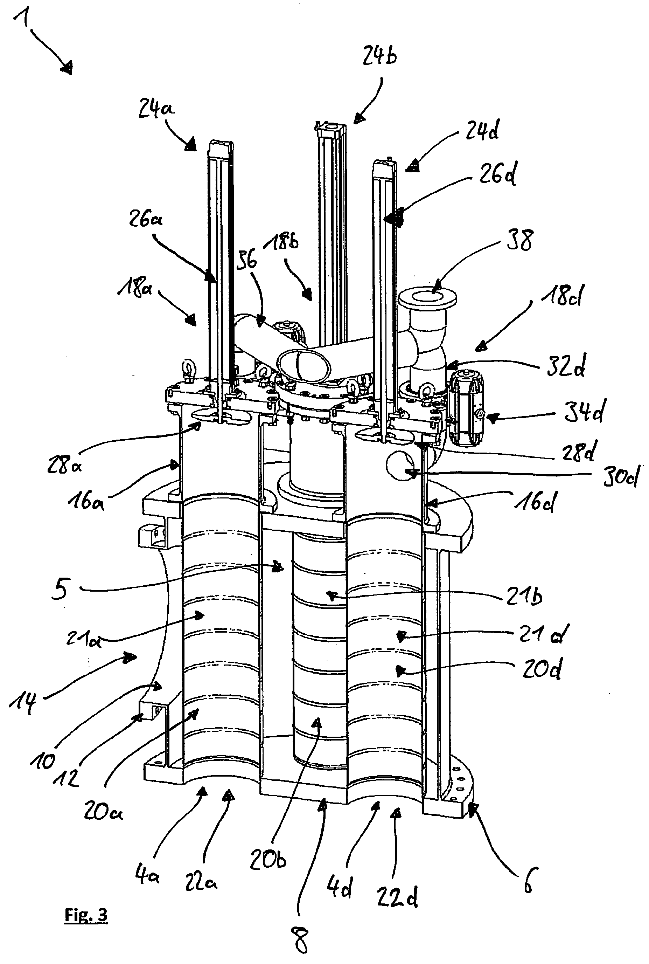

In dem Gehäuse 2 sind vier Filterelemente 20a, 20b, 20c, 20d (Figuren 2 und 3) angeordnet. Diese Filterelemente 20a, 20b, 20c, 20d sind im Wesentlichen aus einem Blech zylindrisch ausgebildet und weisen eine Vielzahl von Öffnungen auf (nicht gezeigt). An einem unteren Ende, bezogen auf die Figuren 1 bis 3, weisen die Filterelemente 20a, 20b, 20c, 20d einen axial angeordneten Einlass 22a, 22b, 22c, 22d auf, der jeweils mit einem Einlass 4a, 4b, 4c, 4d des Gehäuses 2 verbunden ist. An einem oberen Ende bezogen auf die Figuren 1 bis 3 sind die Filterelemente 20a, 20b, 20c, 20d mit einem geschlossenen Rohrfortsatz 16a, 16b, 16c, 16d verbunden, an dem jeweils eine Reinigungseinrichtung 18a, 18b, 18c, 18d angeordnet ist.

Bezogen auf die Figuren 1 bis 3 strömt eine zu filternde Flüssigkeit durch die vier Einlässe 4a, 4b, 4c, 4d in das Gehäuse 2 und somit durch die Einlässe 22a, 22b, 22c, 22d in das Innere der Filterelemente 20a, 20b, 20c, 20d ein, strömt dann durch die Wirkflächen 21a, 21b, 21c, 21d der Filterelemente 20a, 20b, 20c, 20d hindurch in einen Zwischenraum 5 zwischen einer inneren Wand des Gehäuses 2 und den Filterelementen 20a, 20b, 20c, 20d. Anschließend strömt die gefilterte Flüssigkeit durch den Auslass 14 aus der Filter-Vorrichtung 1 aus. Die Filterelemente 20a, 20b, 20c, 20d sind bezogen auf diesen Flüssigkeitsstrom parallel geschaltet angeordnet.

Die Reinigungseinrichtungen 18a, 18b, 18c, 18d weisen jeweils eine Hubeinrichtung 24a, 24b, 24c, 24d sowie eine Hubstange 26a, 26b, 26c, 26d auf. An einem unteren Ende, bezogen auf die Figuren 1 bis 3, der Hubstange 26a, 26b, 26c, 26d ist ein Filter-Reinigungselement 28a, 28b, 28c, 28d angeordnet. Dieses Filter-Reinigungselement 28a, 28b, 28c, 28d ist gemäß diesem Ausführungsbeispiel im Wesentlichen scheibenförmig ausgebildet. Die Reinigungseinrichtung 18a, 18b, 18c, 18d ist gemäß diesem Ausführungsbeispiel in einem Ruhezustand dargestellt, d. h. dass die Hubstange 26a, 26b, 26c, 26d in einer zurückgezogenen Position ist, und sich das Filter-Reinigungselement 28a, 28b, 28c, 28d außerhalb der Filterelemente 20a, 20b, 20c, 20d befindet.

Beim Betrieb der Filter-Vorrichtung 1 setzen sich nun aus der Flüssigkeit gefilterte Partikel, Lebewesen und ähnliches an einer inneren Oberfläche der Wirkflächen 21a, 21b, 21c, 21d der Filterelemente 20a, 20b, 20c, 20d ab. Dadurch verstopfen die Öffnungen nach und nach, wodurch ein Durchströmen der Wirkflächen 21a, 21b, 21c, 21d nicht mehr möglich ist. Zum Reinigen der Filterelemente 20a, 20b, 20c, 20d wird nun das Filter-Reinigungselement 28a, 28b, 28c, 28d mittels der Hubstange 26a, 26b, 26c, 26d über die Hubeinrichtung 24a, 24b, 24c, 24d axial in die Filterelemente 20a, 20b, 20c, 20d eingeführt und vorzugsweise in dem Filterelement 20a, 20b, 20c, 20d hin und her bewegt. Da zwischen einer inneren Wand eines Filterelements 20a, 20b, 20c, 20d und dem Filter-Reinigungselement 28a, 28b, 28c, 28d nur ein geringer Spalt ausgebildet ist, erhöht sich die Strömungsgeschwindigkeit der in dem Filterelement 20a, 20b, 20c, 20d strömenden Flüssigkeit lokal, wobei der Druck lokal abnimmt, wodurch anhaftende Partikel, Lebewesen und ähnliches entfernt bzw. abgereinigt werden. Lebewesen werden dabei zusätzlich abgetötet.

Ferner sind an den Rohrfortsätzen 16a, 16b, 16c, 16d Rückspülauslässe 30a, 30b, 30c, 30d angeordnet, durch die stark verschmutzte Flüssigkeit nach einem Reinigen der Filterelemente 20a, 20b, 20c, 20d mittels der Reinigungseinrichtung 18a, 18b, 18c, 18d aus der Filter-Vorrichtung 1 abgelassen bzw. entfernt werden kann. Dazu sind an jedem dieser Rückspülauslässe 30a, 30b, 30c, 30d Schließeinrichtungen 34a, 34b, 34c, 34d angeordnet, zum selektiven Freigeben und Verschließen der Rückspülauslässe 30a, 30b, 30c, 30d. Die Rückspülauslässe 30a, 30b, 30c, 30d sind ferner mittels Rohren 32a, 32b, 32c, 32d mit einem Verbindungsrohr 36 verbunden, welches in einem Auslass 38 mündet. So sind alle Rückspülauslässe 30a, 30b, 30c, 30d mit dem Auslass 38 verbunden und stark verschmutzte Flüssigkeit kann nach dem Reinigen aus dem Auslass 38 ausgelassen werden.

Indem vier Filterelemente 20a, 20b, 20c, 20d parallel geschaltet in dem Gehäuse 2 angeordnet sind, wird einerseits die Baugröße der Filter-Vorrichtung 1 wesentlich reduziert als auch die Effizienz einer Filter-Vorrichtung 1 erhöht. Durch diese Anordnung ist es möglich, dass die Summe der Wirkflächen 21a, 21b, 21c, 21d, die gemäß diesem Ausführungsbeispiel der Zylindermantelfläche der Filterelemente 20a, 20b, 20c, 20d entspricht, größer ist als die Zylindermantelfläche der inneren Oberfläche des Gehäuses 2. Zudem ist das Volumen eines Filterelements 20a, 20b, 20c, 20d bezogen auf das Volumen der gesamten Filter-Vorrichtung 1 relativ klein, sodass die Filter-Vorrichtung 1 beim Auslassen von stark verschmutzter Flüssigkeit nach einem Reinigungsvorgang aus dem Auslass 38 im Verhältnis wenig Flüssigkeit verliert, d. h. im Verhältnis zum gesamten Filter-Vorrichtungsvolumen eine kleine Menge an Flüssigkeit ungefiltert ist. Zudem ist es möglich, die Reinigungseinrichtungen 18a, 18b, 18c, 18d nacheinander bzw. nicht gleichzeitig zu betätigen, sodass jeweils drei der vier Filterelemente 20a, 20b, 20c, 20d in Betrieb sind und nur eines nicht im Betrieb ist. Dadurch ist der Betrieb der Filter-Vorrichtung 1 nur geringfügig eingeschränkt.

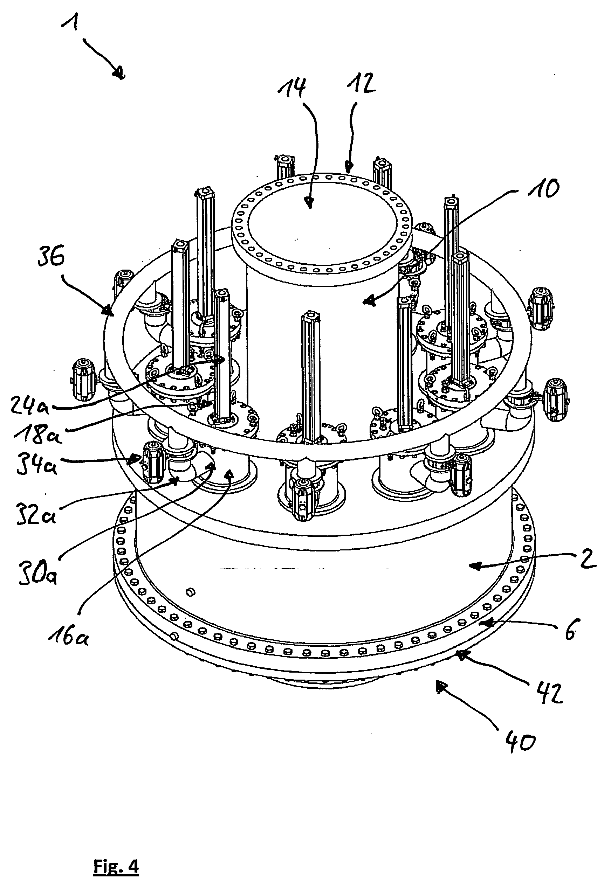

In den Figuren 4 bis 7 ist eine Filter-Vorrichtung 1 gemäß einem zweiten Ausführungsbeispiel dargestellt. Gleiche und ähnliche Teile sind mit gleichen Bezugszeichen versehen.

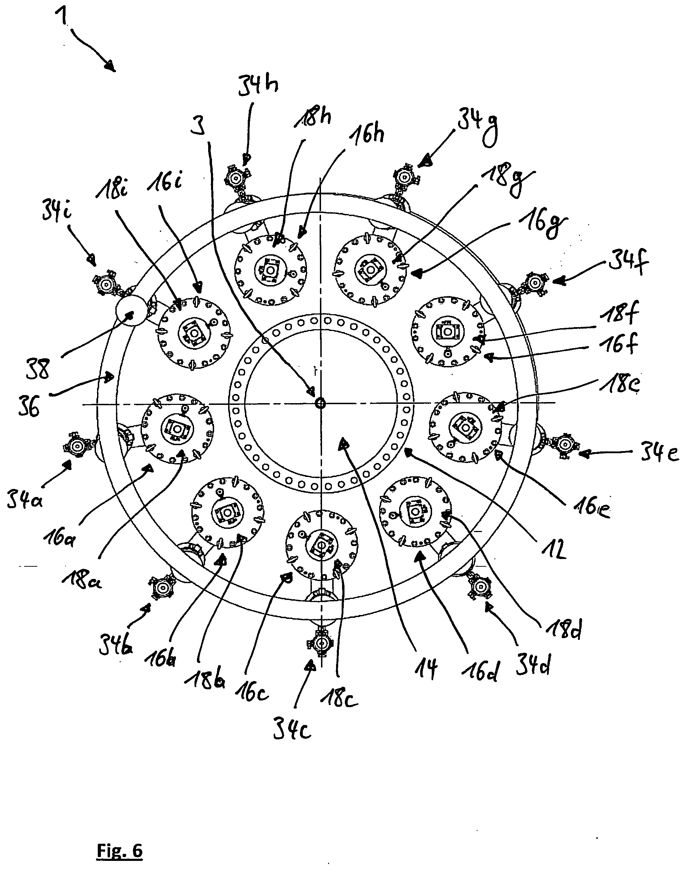

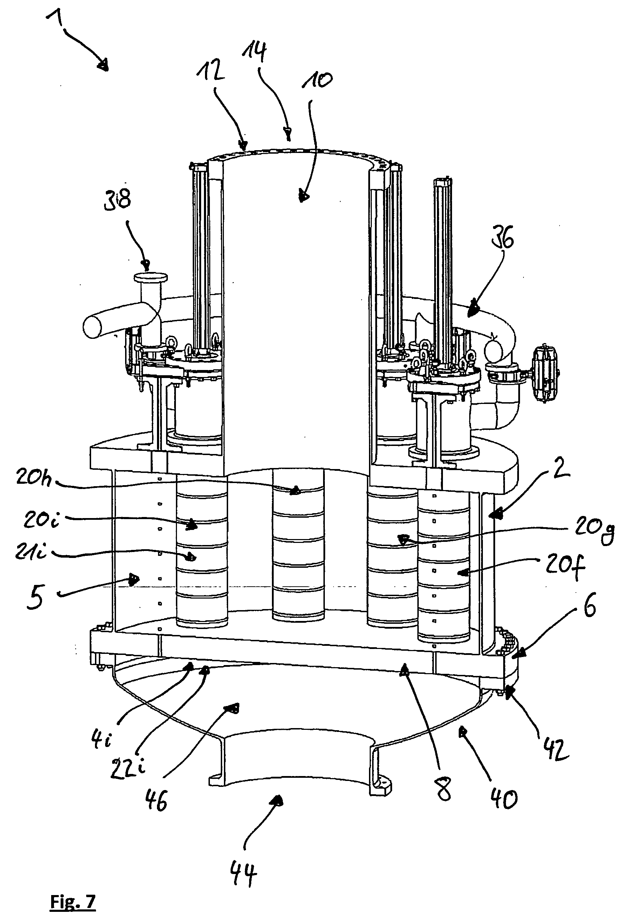

Die Filter-Vorrichtung 1 gemäß diesem zweiten Ausführungsbeispiel (Figuren 4 bis 7) weist ein im Wesentlichen zylindrisches Gehäuse 2 (Figuren 4, 5, 7) auf. In dem Gehäuse 2 sind neun Filterelemente 20f, 20g, 20h, 20i (Figur 7, nur vier mit Bezugszeichen versehen) angeordnet. Jedes Filterelement 20f, 20g, 20h, 20i ist einer Reinigungseinrichtung 18a - 18i zugeordnet, welche jeweils an einem Rohrfortsatz 16a - 16i des Gehäuses 2 angeordnet sind (siehe insbesondere Figur 6). Wie insbesondere aus Figur 6 ersichtlich ist, sind die neun Filterelemente 20f, 20g, 20h, 20i (nur vier mit Bezugszeichen versehen) in einem Kreis angeordnet, welcher konzentrisch zu der Zentralachse 3 der Filter-Vorrichtung 1 angeordnet ist.

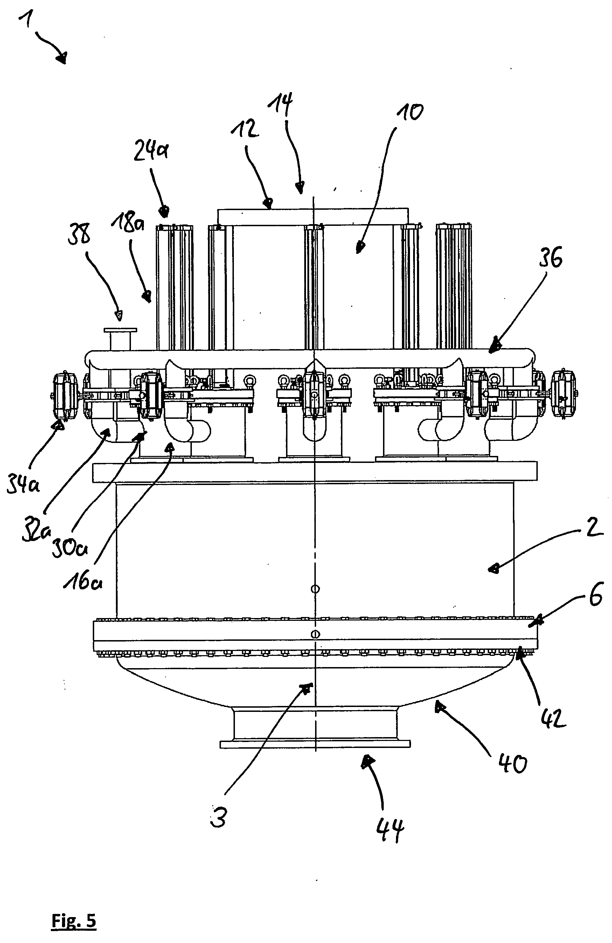

Das Gehäuse 2 weist ferner einen Auslass 14 auf, der gemäß diesem Ausführungsbeispiel (Figuren 4 bis 7) axial bezogen auf die Längsachse 3 der Filter-Vorrichtung 1 angeordnet ist, und nicht wie im ersten Ausführungsbeispiel (Figuren 1 bis 3) radial. Die Filterelemente 20f, 20g, 20h, 20i sind dementsprechend in einem Kreis konzentrisch um den Auslass 14 angeordnet. Der Auslass 14 ist mit einem Rohr 10 verbunden, welches einen Flansch 12 aufweist. Wie insbesondere aus Figur 5 ersichtlich, kann das Rohr 10 mit dem Flansch 12 in einer vertikalen Bauhöhe (bezogen auf Figur 5) die Hubeinrichtungen 24a (nur eine mit Bezugszeichen versehen) der Filter-Vorrichtung 1 überragen. Dadurch ist der Einbau einer solchen Filter-Vorrichtung 1 in ein vorhandenes System wesentlich vereinfacht. Zudem ist die Bauform sehr kompakt.

An einem unteren Ende (bezogen auf Figur 7) weist das Gehäuse 2 eine Grundplatte 8 auf. In dieser Grundplatte 8 sind entsprechend den neun Filterelementen 20f, 20g, 20h, 20i (nur vier mit Bezugszeichen versehen) neun Einlässe 4i (nur einer mit Bezugszeichen versehen) angeordnet. Diese Einlässe 4i sind direkt mit dem jeweiligen Einlass 22i (nur einer mit Bezugszeichen versehen) der Filterelemente 20f, 20g, 20h, 20i verbunden.

Ferner ist an dem Flansch 6 des Gehäuses 2 ein Einlassverteiler 40 angeflanscht, zum Verteilen eines Stroms zu filternder Flüssigkeit auf die Einlässe 4i. Der Einlassverteiler 40 ist gemäß diesem Ausführungsbeispiel glockenförmig ausgebildet. Der Einlassverteiler 40 weist an einem Ende einen Flansch 42 zum Anflanschen an das Gehäuse 2 auf, an dem gegenüberliegenden Ende weist der Einlassverteiler 40 einen Einlass 44 auf. Zusammen mit der Grundplatte 8 des Gehäuses 2 bildet der Einlassverteiler 40 einen Verteilerraum 46. Einlass 44 ist dabei koaxial bezogen auf die Zentralachse 3 der Filter-Vorrichtung 1 angeordnet (Figur 5). Somit sind auch Einlass 44 des Einlassverteilers 40 sowie Auslass 14 der Filter-Vorrichtung 1 koaxial zueinander ausgerichtet. Dadurch wird der Einbau in ein bestehendes System einer solchen Filter-Vorrichtung 1 wesentlich vereinfacht.

Entsprechend diesem Ausführungsbeispiel (Figuren 4 bis 7) strömt zu filternde Flüssigkeit zunächst durch den Einlass 44 in den Verteilerraum 46 ein. Von da aus strömt die zu filternde Flüssigkeit durch einen der Einlässe 4i (nur einer mit Bezugszeichen versehen) in einen Innenraum jeweils eines Filterelements 20f, 20g, 20h, 20i (nur vier mit Bezugszeichen versehen) hinein. Dabei wird der zu filternde Flüssigkeitsstrom im Wesentlichen gleichmäßig auf die verschiedenen Filterelemente 20f, 20g, 20h, 20i aufgeteilt. Nachdem die zu filternde Flüssigkeit im Wesentlichen axial in ein Filterelement 20f, 20g, 20h, 20i hineingeströmt ist, durchströmt sie in radialer Richtung die Wirkflächen 21i (nur eine mit Bezugszeichen versehen) der Filterelemente 20f, 20g, 20h, 20i und tritt so in den Zwischenraum 5 zwischen Gehäuse 2 und Filterelementen 20f, 20g, 20h, 20i ein. Von da aus strömt die nun gefilterte Flüssigkeit aus dem Auslass 14 aus der Filter-Vorrichtung 1 aus.

Wie auch schon im ersten Ausführungsbeispiel (Figuren 1 bis 3) ist an jedem Rohrfortsatz 16a - 16i ein Rückspülauslass 30a (Figuren 4 und 5, nur einer mit Bezugszeichen versehen) angeordnet. Jeder Rückspülauslass 30a ist über ein Rohr 32a (Figuren 4 und 5, nur eines mit Bezugszeichen versehen) mit einem Verbindungsrohr 36 verbunden. Dieses Verbindungsrohr 36 verbindet sämtliche Rohre 32a miteinander und mit dem Auslass 38 zum Auslassen der rückgespülten Flüssigkeit. Gemäß diesem Ausführungsbeispiel (Figuren 4 bis 7) ist dieses Verbindungsrohr 36 kreisförmig ausgebildet und ebenfalls koaxial zu der Zentralachse 3 der Filter-Vorrichtung 1 angeordnet. Ferner ist jeder Rückspülauslass 30a mit einer Schließeinrichtung 34a - 34i selektiv verschließbar. So ist es möglich, die einzelnen Filterelemente 20f, 20g, 20h, 20i nacheinander bzw. nicht gleichzeitig zu reinigen, sodass beispielsweise jeweils ein Filterelement 20f, 20g, 20h, 20i gereinigt wird während die restlichen acht Filterelemente weiter zum Filtern genutzt werden. Dadurch wird die Betriebsfähigkeit einer Filter-Vorrichtung 1 wesentlich erhöht.

Ferner ist es durch das Verbindungsrohr 36 möglich auch schon bei einem Reinigungsvorgang rückgespülte Flüssigkeit, welche aus einem Rückspülauslass 30a in das Rohr 36 ausgelassen wurde zum Rückspülen eines weiteren Filterelements 20f, 20g, 20h, 20i zu nutzen.

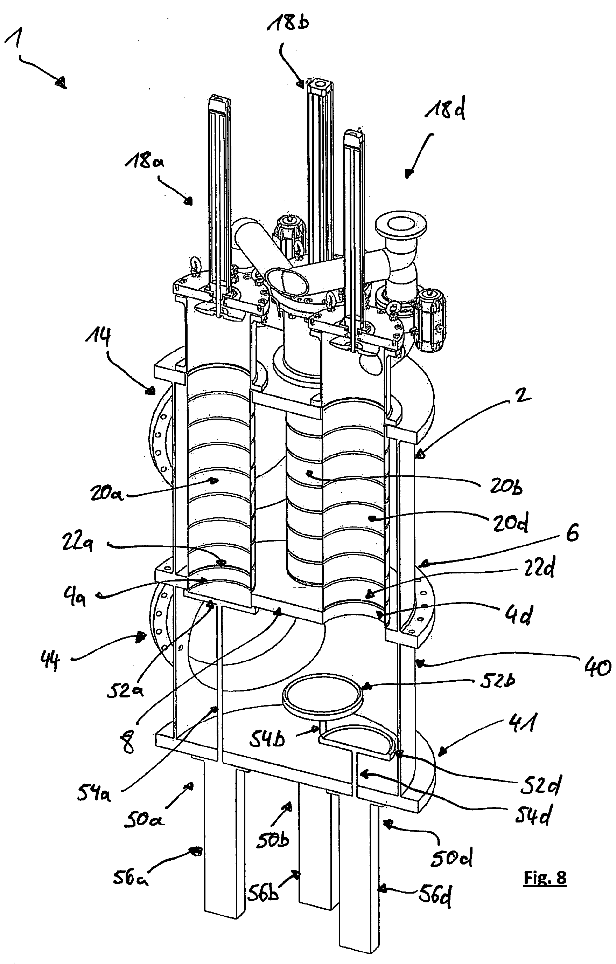

Figur 8 illustriert ein weiteres Ausführungsbeispiel der Filter-Vorrichtung 1, bei der die Filterelemente 20a, 20b, 20d selektiv absperrbar sind. Gleiche und ähnliche Elemente sind mit gleichen Bezugszeichen versehen. Insofern wird vollumfänglich auf die obige Beschreibung zu den Figuren 1 bis 7 Bezug genommen.

Im Allgemeinen ist die Filter-Vorrichtung 1 gemäß dem dritten Ausführungsbeispiel entsprechend der des ersten Ausführungsbeispiels (Figuren 1 bis 3) gebildet. Sie weist ebenfalls ein Gehäuse 2 mit einem Auslass 14, vier in dem Gehäuse 2 parallel geschaltet angeordnete Filterelemente 20a, 20b, 20d (in Figur 8 nur drei gezeigt) auf, die jeweils mit einer Reinigungseinrichtung 18a, 18b, 18d ausgestattet sind. An dem bezogen auf Figur 8 unteren Ende des Gehäuses 2 weist dieses eine Bodenplatte 8 auf, in der vier Einlässe 4a, 4d (nur zwei mit Bezugszeichen versehen) ausgebildet sind. Die Einlässe 4a, 4d sind mit den Einlässen 22a, 22d (nur zwei mit Bezugszeichen versehen) der Filterelemente 20a, 20b, 20d verbunden. Im Unterschied zu dem ersten Ausführungsbeispiel ist hier (Figur 8) an der Bodenplatte 8 ein Einlassverteiler 40 angeformt, der nicht nur als Verteiler für die zu filternde Flüssigkeit dient, sondern ebenso als Aufnahme für vier, jeweils einem Filterelement 20a, 20b, 20d zugeordnete Ventile 50a, 50b, 50d (in Figur 8 nur drei Stück gezeigt). Dazu weist der Einlassverteiler 40 eine dem Gehäuse 2 entsprechende zylindrische Form auf und ist auf der dem Gehäuse abgewandten Seite mit einer Platte 41 verschlossen. Der Einlass 44 zu dem Einlassverteiler 40 ist, im Gegensatz zu dem zweiten Ausführungsbeispiel (Figuren 4 bis 7), quer zu einer Längsachse der Filtervorrichtung 1 ausgerichtet. So ist genügend Raum für die Ventile 50a, 50b, 50d.

Die Ventile 50a, 50b, 50d weisen einen Ventilkörper 52a, 52b, 52d auf, der im Wesentlichen scheibenförmig ausgebildet ist. Ränder der entsprechenden Gehäuse-Einlässe 4a, 4d bilden einen Ventilsitz für die Ventilkörper 52a, 52b, 52d. Die Ventilkörper 52a, 52b, 52d sind jeweils auf einer Schubstange 54a, 54b, 54d montiert, die im Wesentlichen koaxial zu den entsprechenden Filterelementen 20a, 20b, 20d ausgerichtet ist. Die Schubstangen 54a, 54b, 54d sind jeweils in einem Antriebskolben 56a, 56b, 56d aufgenommen, mittels dem die Ventile 50a, 50b, 50d antreibbar sind. In einer offenen, nicht versperrten Position befinden sich die Ventilkörper 52a, 52b, 52d in der Nähe der Platte 41, wie dies bei den Ventilkörpern 52b und 52d in Figur 8 gezeigt ist. Der Ventilkörper 52a befindet sich gemäß Figur 8 in einer geschlossenen Position und sperrt so das Filterelement 20a ab. Dieses ist gemäß diesem Ausführungsbeispiel passiv, d.h. Flüssigkeit kann zwar die Wirkflächen des Filterelements 20a durchströmen, jedoch wird keine zu filternde Flüssigkeit durch den Einlass 22a in das Filterelement 20a eingelassen.

## Patentansprüche

1. Filter-Vorrichtung (1) zum Filtern einer Flüssigkeit mit
einem Gehäuse (2), welches wenigstens einen Einlass (4a, 4b, 4c, 4d, 4i) zum Einlassen der zu filternden Flüssigkeit und wenigstens einen Auslass (14) zum Abgeben der zu filternden Flüssigkeit aufweist,
wenigstens zwei in das Gehäuse (2) einsetzbaren im Wesentlichen zylindrischen Filterelementen (20a, 20b, 20c, 20d, 20f, 20g, 20h, 20i), welche eine Vielzahl von Öffnungen aufweisen, durch welche die Flüssigkeit hindurch strömen kann, und dabei Partikel aus der Flüssigkeit herausgefiltert werden,
wenigstens jeweils einem in ein Filterelement (20a, 20b, 20c, 20d, 20f, 20g, 20h, 20i) einführbaren Filter-Reinigungselement (28a, 28d),
und jeweils einer das Filter-Reinigungselement (28a, 28d) aufweisenden Reinigungseinrichtung (18a, 18b, 18c, 18d, 18e, 18f, 18g, 18h, 18i) zum Reinigen des Filterelements (20a, 20b, 20c, 20d, 20f, 20g, 20h, 20i), welche an einem dem Einlass (22a, 22b, 22c, 22d, 22i) gegenüberliegenden Ende eines Filterelements (20a, 20b, 20c, 20d, 20f, 20g, 20h, 20i) angeordnet ist, wobei die Reinigungseinrichtung (18a, 18b, 18c, 18d, 18e, 18f, 18g, 18h, 18i) eine Hubeinrichtung (24a, 24b, 24c, 24d) und eine Hubstange (26a, 26d) aufweist und das Filter-Reinigungselement (28a, 28d) an der Hubstange (26a, 26d) angeordnet ist, wobei die Hubeinrichtung (24a, 24b, 24c, 24d) dazu eingerichtet ist, das Filter-Reinigungselement (28a, 28d) so in das Filterelement (20a, 20b, 20c, 20d, 20f, 20g, 20h, 20i) mittels der Hubstange (26a, 26d) axial einzuführen, dass zwischen einer inneren Wand des Filterelements (20a, 20b, 20c, 20d, 20f, 20g, 20h, 20i) und dem Filter-Reinigungselement (28a, 28d) ein Reinigungsspalt gebildet wird, sodass in einem Bereich einer inneren Oberfläche des Filterelements (20a, 20b, 20c, 20d, 20f, 20g, 20h, 20i) eine Strömungsgeschwindigkeit der zu filternden Flüssigkeit erhöht und dabei an einer inneren Oberfläche des Filterelements (20a, 20b, 20c, 20d, 20f, 20g, 20h, 20i) befindliche Stoffe abgespült werden,
**gekennzeichnet durch** einen versperrbaren Rückspülauslass (30a, 30b, 30c, 30d) an einem dem Einlass (22a, 22b, 22c, 22d, 22i) gegenüberliegenden Ende eines Filterelements (20a, 20b, 20c, 20d, 20f, 20g, 20h, 20i) zum selektiven Auslassen von zur Reinigung des Filterelements (20a, 20b, 20c, 20d, 20f, 20g, 20h, 20i) genutzter Flüssigkeit, wobei die Filterelemente (20a, 20b, 20c, 20d, 20f, 20g, 20h, 20i) in der Filter-Vorrichtung (1) parallel geschaltet angeordnet sind und wobei die Reinigungseinrichtung (18a, 18b, 18c, 18d, 18e, 18f, 18g, 18h, 18i) ein Bürstenelement aufweist, welches an der Hubstange (26a, 26d) angeordnet ist und berührend wirkt.

2. Filter-Vorrichtung nach Anspruch 1,
**dadurch gekennzeichnet, dass** das Gehäuse (2) im Wesentlichen zylindrisch ist und die Filterelemente (20a, 20b, 20c, 20d, 20f, 20g, 20h, 20i) so in dem Gehäuse (2) angeordnet sind, dass die Zentralachsen (3) des Gehäuses (2) und der Filterelemente (20a, 20b, 20c, 20d, 20f, 20g, 20h, 20i) im Wesentlichen parallel zueinander sind, wobei die Summe der Wirkflächen (21a, 21b, 21c, 21i) der Filterelemente (20a, 20b, 20c, 20d, 20f, 20g, 20h, 20i) größer ist als die radial innere Oberfläche des Gehäuses (2).

3. Filter-Vorrichtung nach einem der vorstehenden Ansprüche,
**dadurch gekennzeichnet, dass** die Einlässe (22a, 22b, 22c, 22d, 22i) der Filterelemente (20a, 20b, 20c, 20d, 20f, 20g, 20h, 20i) mit einem Einlassverteiler (40) verbunden sind, der dazu angepasst ist, einen Einlassstrom der zu filternden Flüssigkeit im Wesentlichen gleichmäßig auf die Einlässe (22a, 22b, 22c, 22d, 22i) der Filterelemente (20a, 20b, 20c, 20d, 20f, 20g, 20h, 20i) zu verteilen.

4. Filter-Vorrichtung nach einem der vorstehenden Ansprüche,
**dadurch gekennzeichnet, dass** das Filter-Reinigungselement (28a, 28d) im Wesentlichen Scheibenförmig ist und der Außendurchmesser des Filter-Reinigungselements (28a, 28d) kleiner ist als der Innendurchmesser des Filterelements (20a, 20b, 20c, 20d, 20f, 20g, 20h, 20i).

5. Filter-Vorrichtung nach einem der vorstehenden Ansprüche,
**dadurch gekennzeichnet, dass** die Geometrie der Öffnungen des Filterelements (20a, 20b, 20c, 20d, 20f, 20g, 20h, 20i) so dimensioniert ist, dass Partikel, welche größer als 200 Mikrometer sind, vorzugsweise größer als 150 Mikrometer sind, insbesondere eine Größe in dem Bereich von 10 bis 20 Mikrometer aufweisen, aus der zu filternden Flüssigkeit herausfilterbar sind.

6. Filter-Vorrichtung nach einem der vorstehenden Ansprüche,
**dadurch gekennzeichnet, dass** eines oder mehrere der Filterelemente (20a, 20b, 20c, 20d, 20f, 20g, 20h, 20i) selektiv absperrbar ist bzw. sind, insbesondere mittels eines Ventils (50).

7. Verfahren zum Filtern von Flüssigkeiten unter Verwendung einer Filter-Vorrichtung nach mindestens einem der vorstehenden Ansprüche, mit den Schritten:
- Einlassen von zu filternder Flüssigkeit durch wenigstens einen Einlass (4a, 4b, 4c, 4d, 4i) in mehrere Filterelemente (20a, 20b, 20c, 20d, 20f, 20g, 20h, 20i);
- Durchströmen von Wirkflächen (21a, 21b, 21c, 21 i) der Filterelemente (20a, 20b, 20c, 20d, 20f, 20g, 20h, 20i) und dabei Filtern der Flüssigkeit;
- Sammeln der gefilterten Flüssigkeit in einem Sammelraum (5);
- Auslassen der gefilterten Flüssigkeit durch einen Auslass (14);
- Reinigen wenigstens eines Filterelements;
- selektiven Auslassen von zur Reinigung des Filterelements benutzter Flüssigkeit durch einen versperrbaren Rückspülauslass (30a, 30b, 30c, 30d) an einem dem Einlass gegenüberliegenden Ende des gereinigten Filterelements;
wobei die Schritte wenigstens teilweise kontinuierlich ausgeführt werden.

8. Verfahren nach Anspruch 7 wobei das Verfahren ein Aufteilen eines Flüssigkeitsstroms auf die mehreren Einlässe (22a, 22b, 22c, 22d, 22i) der Filterelemente (20a, 20b, 20c, 20d, 20f, 20g, 20h, 20i) umfasst.

9. Verfahren nach einem der Ansprüche 7 oder 8, wobei die Flüssigkeit Lebewesen enthält, mit den zusätzlichen Schritten:
- Sammeln der Lebewesen an einer Wirkfläche (21a, 21b, 21c, 21i) eines Filterelements (20a, 20b, 20c, 20d, 20f, 20g, 20h, 20i);
- Erzeugen einer Strömung wenigstens teilweise parallel zu der Wirkfläche (21a, 21b, 21c, 21i), wobei die Strömung so ausgebildet ist, dass wenigstens ein Teil der gesammelten Lebewesen abgetötet wird.

## Claims

1. A filter apparatus (1) for filtering a liquid, with a housing (2) which has at least one inlet (4a, 4b, 4c, 4d, 4i) for admitting the liquid to be filtered, and at least one outlet (14) for discharging the liquid to be filtered,
at least two substantially cylindrical filter elements (20a, 20b, 20c, 20d, 20f, 20g, 20h, 20i) which can be inserted into the housing (2), which have a large number of openings through which the liquid can flow, and in that case particles are filtered out of the liquid,
at least in each case one filter cleaning element (28a, 28d) which can be introduced into a filter element (20a, 20b, 20c, 20d, 20f, 20g, 20h, 20i),
and in each case a cleaning device (18a, 18b, 18c, 18d, 18e, 18f, 18g, 18h, 18i), which comprises the filter cleaning element (28a, 28d), for cleaning the filter element (20a, 20b, 20c, 20d, 20f, 20g, 20h, 20i), which device is arranged on an end of a filter element (20a, 20b, 20c, 20d, 20f, 20g, 20h, 20i), which end is located opposite the inlet (22a, 22b, 22c, 22d, 22i), wherein the cleaning device (18a, 18b, 18c, 18d, 18e, 18f, 18g, 18h, 18i) has a stroke device (24a, 24b, 24c, 24d) and a stroke bar (26a, 26d) and the filter cleaning element (28a, 28d) is arranged on the stroke bar (26a, 26d), wherein the stroke device (24a, 24b, 24c, 24d) is adapted to introduce the filter cleaning element (28a, 28d) axially into the filter element (20a, 20b, 20c, 20d, 20f, 20g, 20h, 20i) by means of the stroke bar (26a, 26d) such that a cleaning gap is formed between an inner wall of the filter element (20a, 20b, 20c, 20d, 20f, 20g, 20h, 20i) and the filter cleaning element (28a, 28d), so that in a region of an inner surface of the filter element (20a, 20b, 20c, 20d, 20f, 20g, 20h, 20i) a flow rate of the liquid to be filtered is increased and in so doing substances located on an inner surface of the filter element (20a, 20b, 20c, 20d, 20f, 20g, 20h, 20i) are flushed away,
**characterised by** a closable backwashing outlet (30a, 30b, 30c, 30d) at an end, located opposite the inlet (22a, 22b, 22c, 22d, 22i), of a filter element (20a, 20b, 20c, 20d, 20f, 20g, 20h, 20i) for selectively discharging liquid used for cleaning the filter element (20a, 20b, 20c, 20d, 20f, 20g, 20h, 20i), the filter elements (20a, 20b, 20c, 20d, 20f, 20g, 20h, 20i) being arranged connected in parallel in the filter apparatus (1), and the cleaning device (18a, 18b, 18c, 18d, 18e, 18f, 18g, 18h, 18i) having a brush element which is arranged on the stroke bar (26a, 26d) and has a contacting effect.

2. A filter apparatus according to Claim 1,
**characterised in that** the housing (2) is substantially cylindrical and the filter elements (20a, 20b, 20c, 20d, 20f, 20g, 20h, 20i) are arranged in the housing (2) such that the central axes (3) of the housing (2) and of the filter elements (20a, 20b, 20c, 20d, 20f, 20g, 20h, 20i) are substantially parallel to each other, the sum of the operative surfaces (21a, 21b, 21c, 21i) of the filter elements (20a, 20b, 20c, 20d, 20f, 20g, 20h, 20i) being greater than the radially inner surface of the housing (2).

3. A filter apparatus according to one of the preceding claims,
**characterised in that** the inlets (22a, 22b, 22c, 22d, 22i) of the filter elements (20a, 20b, 20c, 20d, 20f, 20g, 20h, 20i) are connected to an inlet distributor (40) which is adapted to distribute an inlet flow of the liquid to be filtered substantially uniformly to the inlets (22a, 22b, 22c, 22d, 22i) of the filter elements (20a, 20b, 20c, 20d, 20f, 20g, 20h, 20i).

4. A filter apparatus according to one of the preceding claims,
**characterised in that** the filter cleaning element (28a, 28d) is substantially disc-shaped and the external diameter of the filter cleaning element (28a, 28d) is smaller than the internal diameter of the filter element (20a, 20b, 20c, 20d, 20f, 20g, 20h, 20i).

5. A filter apparatus according to one of the preceding claims,
**characterised in that** the geometry of the openings of the filter element (20a, 20b, 20c, 20d, 20f, 20g, 20h, 20i) is of such dimensions that particles which are larger than 200 micrometres, preferably larger than 150 micrometres, in particular which have a size in the range from 10 to 20 micrometres, can be filtered out of the liquid to be filtered.

6. A filter apparatus according to one of the preceding claims,
**characterised in that** one or more of the filter elements (20a, 20b, 20c, 20d, 20f, 20g, 20h, 20i) can be selectively blocked off, in particular by means of a valve (50).

7. A method for filtering liquids using a filter apparatus according to at least one of the preceding claims, having the steps:
- admitting liquid which is to be filtered through at least one inlet (4a, 4b, 4c, 4d, 4i) into a plurality of filter elements (20a, 20b, 20c, 20d, 20f, 20g, 20h, 20i);
- flowing through operative surfaces (21 a, 21b, 21c, 21 i) of the filter elements (20a, 20b, 20c, 20d, 20f, 20g, 20h, 20i) and in so doing filtering the liquid;
- collecting the filtered liquid in a collecting chamber (5);
- letting out the filtered liquid through an outlet (14);
- cleaning at least one filter element;
- selectively letting out liquid used for cleaning the filter element through a closable backwashing outlet (30a, 30b, 30c, 30d) on an end of the cleaned filter element which is located opposite the inlet;
wherein the steps are carried out at least partially continuously.

8. A method according to Claim 7, wherein the method comprises dividing a liquid flow between the plurality of inlets (22a, 22b, 22c, 22d, 22i) of the filter elements (20a, 20b, 20c, 20d, 20f, 20g, 20h, 20i).

9. A method according to one of Claims 7 or 8, wherein the liquid contains living organisms, with the additional steps:
- collecting the living organisms on an operative surface (21a, 21b, 21c, 21i) of a filter element (20a, 20b, 20c, 20d, 20f, 20g, 20h, 20i);
- generating a flow at least partially parallel to the operative surface (21a, 21b, 21c, 21 i), wherein the flow is formed such that at least some of the collected living organisms are killed off.

## Revendications

1. Dispositif à filtre (1) servant à filtrer un liquide, comprenant
un boîtier (2), qui présente au moins une entrée (4a, 4b, 4c, 4d, 4i) servant à faire entrer le liquide à filtrer et au moins une sortie (14) servant à distribuer le liquide à filtrer,
au moins deux éléments filtrants (20a, 20b, 20c, 20d, 20f, 20g, 20h, 20i) essentiellement cylindriques pouvant être insérés dans le boîtier (2), lesquels présentent une pluralité d'ouvertures, par lesquelles le flux de liquide peut s'écouler, et filtrent ce faisant des particules du liquide,
au moins respectivement un élément de nettoyage de filtre (28a, 28d) pouvant être introduit dans un élément filtrant (20a, 20b, 20c, 20d, 20f, 20g, 20h, 20i),
et respectivement un système de nettoyage (18a, 18b, 18c, 18d, 18e, 18f, 18h, 18i) présentant l'élément de nettoyage de filtre (28a, 28d), servant à nettoyer l'élément filtrant (20a, 20b, 20c, 20d, 20f, 20g, 20h, 20i), lequel est disposé au niveau d'une extrémité, faisant à face à l'entrée (22a, 22b, 22c, 22d, 22i), d'un élément filtrant (20a, 20b, 20c, 20d, 20f, 20g, 20h, 20i), sachant que le système de nettoyage (18a, 18b, 18c, 18d, 18e, 18f, 18g, 18h, 18i) présente un système de levage (24a, 24b, 24c, 24d) et une tige de levage (26a, 26b) et que l'élément de nettoyage de filtre (28a, 28d) est disposé au niveau de la tige de levage (26a, 26d), sachant que le système de levage (24a, 24b, 24c, 24d) est configuré pour introduire de manière axiale l'élément de nettoyage de filtre (28a, 28d) dans l'élément filtrant (20a, 20b, 20c, 20d, 20f, 20g, 20h, 20i) au moyen de la tige de levage (26a, 26d) de telle manière qu'est formée, entre une paroi intérieure de l'élément filtrant (20a, 20b, 20c, 20d, 20f, 20g, 20h, 20i) et l'élément de nettoyage de filtre (28a, 28d), une fente de nettoyage si bien qu'une vitesse d'écoulement du liquide à filtrer est augmentée dans une zone d'une surface intérieure de l'élément filtrant (20a, 20b, 20c, 20d, 20f, 20g, 20h, 20i) et que ce faisant des substances se trouvant au niveau d'une surface intérieure de l'élément filtrant (20a, 20b, 20c, 20d, 20f, 20g, 20h, 20i) sont nettoyées,
**caractérisé par** une sortie à rinçage à contre-courant (30a, 30b, 30c, 30d) pouvant être obturée au niveau d'une extrémité, faisant face à l'entrée (22a, 22b, 22c, 22d, 22i), d'un élément filtrant (20a, 20b, 20c, 20d, 20f, 20g, 20h, 20i) servant à faire sortir de manière sélective du liquide utilisé aux fins du nettoyage de l'élément filtrant (20a, 20b, 20c, 20d, 20f, 20g, 20h, 20i), sachant que les éléments filtrants (20a, 20b, 20c, 20d, 20f, 20g, 20h, 20i) sont disposés dans le dispositif à filtre (1) selon un branchement parallèle et sachant que le système de nettoyage (18a, 18b, 18c, 18d, 18e, 18f, 18g, 18h, 18i) présente un élément formant balai, qui est disposé au niveau de la tige de levage (26a, 26d) et agit par contact.

2. Dispositif à filtre selon la revendication 1,
**caractérisé en ce que** le boîtier (2) est essentiellement cylindrique, et **en ce que** les éléments filtrants (20a, 20b, 20c, 20d, 20f, 20g, 20h, 20i) sont disposés de telle manière dans le boîtier (2) que les axes centraux (3) du boîtier (2) et des éléments filtrants (20, 20b, 20c, 20d, 20f, 20g, 20h, 20i) sont essentiellement parallèles les uns par rapport aux autres, sachant que la somme des faces actives (21a, 21b, 21c, 21i) des éléments filtrants (20a, 20b, 20c, 20d, 20f, 20g, 20h, 20i) est plus grande que la surface radialement intérieure du boîtier (2).

3. Dispositif à filtre selon l'une quelconque des revendications précédentes,
**caractérisé en ce que** les entrées (22a, 22b, 22c, 22d, 22i) des éléments filtrants (20a, 20b, 20c, 20d, 20f, 20g, 20h, 20i) sont reliées à un répartiteur d'entrée (40), qui est adapté pour répartir un flux entrant du liquide à filtrer essentiellement de manière homogène sur les entrées (22a, 22b, 22c, 22d, 22i) des éléments filtrants (20a, 20b, 20c, 20d, 20f, 20g, 20h, 20i).

4. Dispositif à filtre selon l'une quelconque des revendications précédentes,
**caractérisé en ce que** l'élément de nettoyage de filtre (28a, 28d) présente essentiellement une forme de disque, et **en ce que** le diamètre extérieur de l'élément de nettoyage de filtre (28, 28d) est plus petit que le diamètre intérieur de l'élément filtrant (20a, 20b, 20c, 20d, 20f, 20g, 20h, 20i).

5. Dispositif à filtre selon l'une quelconque des revendications précédentes,
**caractérisé en ce que** la géométrie des ouvertures de l'élément filtrant (20a, 20b, 20c, 20d, 20f, 20g, 20h, 20i) présente des dimensions telles que des particules, dont la taille est supérieure à 200 microns, de préférence supérieure à 150 microns, présentant en particulier une dimension située dans la plage allant de 10 à 20 microns, peuvent être filtrées du liquide à filtrer.

6. Dispositif à filtre selon l'une quelconque des revendications précédentes,
**caractérisé en ce qu'**un ou plusieurs éléments filtrants (20a, 20b, 20c, 20d, 20f, 20g, 20h, 20i) peuvent être fermés de manière sélective, en particulier au moyen d'une soupape (50).

7. Procédé servant à filtrer des liquides en utilisant un dispositif à filtre selon au moins l'une quelconque des revendications précédentes, comprenant les étapes suivantes consistant à :
- faire entrer un liquide à filtrer par au moins une entrée (4a, 4b, 4c, 4d, 4i) dans plusieurs éléments filtrants (20a, 20b, 20c, 20d, 20f, 20g, 20h, 20i) ;
- traverser des faces actives (21a, 21b, 21c, 21i) des éléments filtrants (20a, 20b, 20c, 20d, 20f, 20g, 20h, 20i) et ce faisant filtrer le liquide ;
- collecter le liquide à filtrer dans un espace de collecte (5) ;
- évacuer le liquide filtré par une sortie (14) ;
- nettoyer au moins un élément filtrant ;
- faire sortir de manière sélective un liquide utilisé aux fins du nettoyage de l'élément filtrant par une sortie de rinçage à contre-courant (30a, 30b, 30c, 30d) pouvant être obstruée au niveau d'une extrémité, faisant face à l'entrée, de l'élément filtrant nettoyé ;
sachant que les étapes sont exécutées au moins en partie en continu.

8. Procédé selon la revendication 7, sachant que le procédé comprend une répartition d'un flux de liquide sur les nombreuses entrées (22a, 22b, 22c, 22d, 22i) des éléments filtrants (20a, 20b, 20c, 20d, 20f, 20g, 20h, 20i).

9. Procédé selon l'une quelconque des revendications 7 ou 8, sachant que le liquide contient des organismes vivants, comprenant les étapes supplémentaires consistant à :
- collecter les organismes vivants au niveau d'une surface active (21a, 21b, 21c, 21i) d'un élément filtrant (20a, 20b, 20c, 20d, 20f, 20g, 20h, 20i) ;
- générer un écoulement au moins en partie de manière parallèle par rapport à la surface active (21a, 21b, 21c, 21i), sachant que l'écoulement est réalisé de telle sorte qu'au moins une partie des organismes vivants collectés sont détruits.
